# EUROPÄISCHE PATENTSCHRIFT

(11) **EP 3 259 496 B1**
(45) Veröffentlichungstag und Bekanntmachung des Hinweises auf die Patenterteilung: **12.12.2018**
(21) Anmeldenummer: 16701046.1
(22) Anmeldetag: 20.01.2016
(51) Int. Cl.: F16H 3/089

(54) **DOPPELKUPPLUNGSGETRIEBE FÜR EIN KRAFTFAHRZEUG**
DUAL CLUTCH TRANSMISSION FOR A MOTOR VEHICLE
BOÎTE DE VITESSES À DOUBLE EMBRAYAGE POUR VÉHICULE À MOTEUR

(30) Priorität: 19.02.2015 DE 102015002134
(43) Veröffentlichungstag der Anmeldung: 27.12.2017
(73) Patentinhaber: Audi AG, 85045 Ingolstadt (DE)
(72) Erfinder: HUMMEL, Steffen, 85055 Ingolstadt (DE)
(86) Internationale Anmeldenummer: PCT/EP2016/051113
(87) Internationale Veröffentlichungsnummer: WO 2016/131596

(56) Entgegenhaltungen:
- DE-A1-102010 040 660
- DE-A1-102011 089 167
- DE-A1-102012 013 248

## Beschreibung

Die vorliegende Erfindung betrifft ein Doppelkupplungsgetriebe für ein Kraftfahrzeug gemäß dem Oberbegriff des Patentanspruchs 1.

Derartige Doppelkupplungsgetriebe haben neben einem guten Wirkungsgrad unter anderem den Vorteil, dass sie ohne Unterbrechung der Zugkraft insbesondere automatisiert schaltbar sind, wobei im jeweils nicht aktivierten Teilgetriebe bereits eine Gangstufe vorwählbar ist, die dann durch Wechsel der lastschaltbaren Kupplungen aktiviert wird. Dabei sind im einen Teilgetriebe die ungeraden Gänge (1, 3, 5, etc.) und im anderen Teilgetriebe die geraden Gänge (2, 4, 6, etc.) mittels entsprechender Zahnradsätze positioniert, die zum Beispiel über Synchronkupplungen mit der jeweiligen Eingangswelle oder der Abtriebswelle trieblich verbunden werden.

Die Axiallänge des Doppelkupplungsgetriebes hängt von der Anzahl von Zahnradsätzen oder Radebenen ab, die in der Axialrichtung hintereinander im Doppelkupplungsgetriebe angeordnet sind. Jede der Radebenen ist aus zumindest zwei Fest- und/oder Loszahnräder aufgebaut. Zwischen den Radebenen sind Schaltelemente angeordnet, bei deren Betätigung Vor- und Rückwärtsgänge schaltbar sind.

Aus der DE 10 2010 040 660 A1 ist ein Doppelkupplungsgetriebe in Vorgelegebauweise bekannt, welches unter den Wortlaut des Oberbegriffes des Anspruches 1 fällt. Aus der DE 10 2011 089 167 A1 ist ein weiteres Doppelkupplungsgetriebe in Vorgelegebauweise bekannt. Aus der DE 10 2012 013 248 A1 ist eine Antriebsvorrichtung für Kraftfahrzeuge bekannt.

Ein Doppelkupplungsgetriebe weist über Schaltelemente schaltbare Zahnradsätzen auf, die insbesondere genau acht Radebenen bilden. Die Radebenen sind jeweils einem ersten Teilgetriebe und einem zweiten Teilgetriebe zugeordnet. Jedes der Teilgetriebe weist je eine Eingangswelle sowie eine gemeinsame Abtriebswelle auf. Die zueinander koaxialen Eingangswellen sind über je eine lastschaltbare Kupplung alternierend aktivierbar, wobei dem ersten Teilgetriebe die geraden Vorwärtsgänge sowie dem zweiten Teilgetriebe die ungeraden Vorwärtsgänge zugeordnet sind, die bei einer Gangschaltung über die Schaltelement schaltbar sind. In dem gattungsgemäßen Doppelkupplungsgetriebe sind zumindest zwei Radebenen eines Teilgetriebes jeweils durch sowohl lose auf der Eingangswelle drehgelagerte antriebsseitige Zahnräder als auch aus damit kämmenden, lose auf der Abtriebswelle drehgelagerte abtriebsseitige Zahnräder aufgebaut. Die losgelagerten Zahnräder der beiden Radebenen können mittels Schaltelemente mit der Eingangswelle und/oder mit der Abtriebswelle gekuppelt werden. Auf diese Weise können die beiden Radebenen teilweise oder vollständig von der Eingangswelle/Abtriebswelle abgekoppelt, das heißt stillgelegt werden. Dadurch reduziert sich vorteilhaft das Trägheitsmoment des aktivierten Teilgetriebes.

Die Aufgabe der Erfindung besteht darin, ein Doppelkupplungsgetriebe bereitzustellen, dass bei einer baulich günstigen Konstruktion größere Freiheitsgrade in der Funktionalität (Schaltstrategie) und in der Auslegung der Gangstufen aufweist.

Die Aufgabe ist durch die Merkmale des Patentanspruches 1 gelöst. Bevorzugte Weiterbildungen der Erfindung sind in den abhängigen Ansprüchen offenbart.

Gemäß dem Patentanspruch 1 sind die beiden abtriebsseitigen Zahnräder der ersten und zweiten Radebenen des ersten Teilgetriebes auf einer abtriebsseitigen Hohlwelle drehfest angeordnet, die auf der Abtriebswelle koaxial drehgelagert ist. Die abtriebsseitige Hohlwelle des ersten Teilgetriebes ist über genau ein erstes Schaltelement (SE-F) mit der Abtriebswelle kuppelbar. Zudem sind die beiden antriebsseitigen Zahnräder der ersten und zweiten Radebenen (RE-1, RE-2) über genau ein zweites Schaltelement (SE-C) alternierend mit der Eingangswelle kuppelbar.

Das obige zweite Schaltelement (SE-C) ist in einer technischen Umsetzung ein in der Axialrichtung beidseitig schaltbares Schaltelement. Das zweite Schaltelement (SE-C) ist in der Axialrichtung zwischen den beiden antriebsseitigen Zahnräder der beiden Radebenen (RE-1 und RE-2) angeordnet und von der Eingangswelle getragen.

Das erste Teilgetriebe weist zudem die dritte Radebene auf, die ein lose auf der Eingangswelle drehgelagertes antriebsseitiges Zahnrad und ein damit kämmendes, lose auf der Abtriebswelle drehgelagertes abtriebsseitiges Zahnrad aufweist. Das abtriebsseitige Zahnrad der dritten Radebene (RE-3) ist mittels des ersten Schaltelementes mit der Abtriebswelle kuppelbar. Das erste Schaltelement (SE-F) ist als ein in der Axialrichtung beidseitig schaltbares Schaltelement realisiert, das zwischen den beiden abtriebsseitigen Zahnrädern der zweiten und der dritten Radebene angeordnet ist.

Das antriebsseitige Zahnrad der dritten Radebene ist zusammen mit dem antriebsseitigen Zahnrad der zweiten Radebene drehfest auf einer, auf der ersten Eingangswelle koaxial drehgelagerten, antriebsseitigen Hohlwelle angeordnet.

Zudem weist das erste Teilgetriebe die vierte Radebene auf, die ein drehfest auf der Abtriebswelle angeordnetes abtriebsseitiges Zahnrad und ein damit kämmendes, lose auf der antriebsseitigen Hohlwelle drehgelagertes antriebsseitiges Zahnrad auf. Das antriebsseitige Zahnrad der vierten Radebene (RE-4) ist mit einem dritten Schaltelement (SE-D) mit der antriebsseitigen Hohlwelle des ersten Teilgetriebes gekuppelt.

Das zweite Teilgetriebe weist die fünfte Radebene (RE-5) auf, die ein lose auf der zweiten Eingangswelle drehgelagertes antriebsseitiges Zahnrad und ein lose auf der Abtriebswelle drehgelagertes abtriebsseitiges Zahnrad besitzt. In einer bevorzugten Ausführungsvariante kann die fünfte Radebene (RE-5) nicht nur auf das zweite Teilgetriebe, sondern auch auf das erste Teilgetriebe schaltbar sein.

Das antriebsseitige Zahnrad der fünften Radebene kann mittels des oben erwähnten dritten Schaltelements (SE-D) mit der antriebsseitigen Hohlwelle des ersten Teilgetriebes gekuppelt werden. In diesem Fall ist das dritte Schaltelement (SE-D) ein in der Axialrichtung beidseitig schaltbares Schaltelement, das in der Axialrichtung zwischen der vierten Radebene (RE-4) und der fünften Radebene (RE-5) von der antriebsseitigen Hohlwelle des ersten Teilgetriebes getragen wird.

Das abtriebsseitige Zahnrad der fünften Radebene (RE-5) ist über ein zusätzliches viertes Schaltelement (SE-G) mit der Abtriebswelle gekuppelt.

In einer weiteren Ausführungsvariante kann das zweite Teilgetriebe die siebte Radebene (RE-7) und die achte Radebene (RE-8), aufweisen. Deren beiden abtriebsseitigen Zahnräder können lose auf der zweiten Eingangswelle drehgelagert sein. In gleicher Weise sind auch deren beiden antriebsseitigen Zahnräder lose auf der Abtriebswelle drehgelagert. Die beiden abtriebsseitigen Los-Zahnräder der beiden obigen Radebenen können zusammen auf einer abtriebsseitigen Hohlwelle drehfest angeordnet sein, die auf der Abtriebswelle koaxial drehgelagert ist. Die abtriebsseitige Hohlwelle des zweiten Teilgetriebes kann über ein fünftes Schaltelement mit der Abtriebswelle werden.

Die beiden antriebsseitigen Zahnräder der siebten und achten Radebenen können über genau ein sechstes Schaltelement SE-A alternierend mit der zweiten Eingangswelle des zweiten Teilgetriebes gekuppelt werden. In diesem Fall kann das sechste Schaltelement in der Axialrichtung zwischen den beiden antriebsseitigen Zahnrädern der beiden Radebenen (RE-7 und RE-8) angeordnet sein und als ein beidseitig schaltbares Schaltelement ausgebildet sein.

Das zweite Teilgetriebe kann zudem die sechste Radebene (RE-6) aufweisen, die ein drehfest auf der Abtriebswelle angeordnetes, abtriebsseitiges Zahnrad und ein damit kämmendes, lose auf der antriebsseitigen Hohlwelle drehgelagertes antriebsseitiges Zahnrad aufweist.

Zwischen der fünften Radebene und der sechsten Radebene kann ein zusätzliches siebte Schaltelement (SE-B) angeordnet, das ein in der Axialrichtung beidseitig wirkendes Schaltelement ist. Das siebte Schaltelement (SE-B) kann entweder das antriebsseitige Zahnrad der fünften Radebene (RE-5) oder das antriebsseitige Zahnrad der sechsten Radebene (RE-6) mit der antriebsseitigen Hohlwelle des zweiten Teilgetriebes kuppeln.

Wie oben erwähnt, kann der Zahnradsatzder fünften Radebene auf das erste Teilgetriebe oder auf das zweite Teilgetriebe schaltbar sein. Dadurch kann bei geringem getriebetechnischen Mehraufwand und ohne Verzicht auf den Vorteil der zugkraftunterbrechungsfreien Beschleunigung des Kraftfahrzeugs zumindest ein Vorwärtsgang übersprungen werden, also beispielsweise von einem ungeraden Vorwärtsgang verzögerungsfrei in den nächsten ungeraden Vorwärtsgang geschaltet werden. Insbesondere bei starken Motorisierungen des Kraftfahrzeugs und bei definierten Fahrbedingungen kann dies eine verbesserte, ohne Schaltverzögerungen ablaufende Beschleunigung und gegebenenfalls einen verbesserten Wirkungsgrad im Fahrbetrieb ermöglichen.

Besonders bevorzugt kann der, die fünfte Radebene bildende Zahnradsatz zumindest den 3. Vorwärtsgang des Teilgetriebes bilden, der mittel- oder unmittelbar wahlweise mit der Eingangswelle des einen oder des anderen Teilgetriebes (A, B) trieblich verbindbar ist. Daraus resultiert neben der regulären Schaltstrategie eine Variante, in der vom 1. Gang in den 3. Gang und bei Bedarf von diesem in den 5. Gang zugkraftunterbrechungsfrei geschaltet werden kann.

Ist bei einer entsprechenden, getriebetechnischen Auslegung der besagte Zahnradsatz auch in den Leistungsfluss des 1. Vorwärtsganges eingebunden, so kann auch hier das Teilgetriebe gewechselt werden, woraus ein zusätzlicher Freiheitsgrad in der Funktionalität geschaffen ist.

In einer bevorzugten Ausgestaltung der Erfindung kann das Festzahnrad des auf beide Teilgetriebe schaltbaren, die fünfte Radebene bildenden Zahnradsatzes auf der gemeinsamen Abtriebswelle des Doppelkupplungsgetriebes angeordnet sein, während das korrespondierende, schaltbare Loszahnrad steuerungstechnisch einfach mit dem dritten Schaltelement (SE-D) des ersten Teilgetriebes (A) oder mit dem vierten Schaltelement (SE-B) des zweiten Teilgetriebes (B) kuppelbar ist. Die Schaltelemente können dabei Doppelkupplungen sein, mittels denen ein Zahnradsatz des einen Teilgetriebes oder der Zahnradsatz des anderen Teilgetriebes schaltbar ist.

In einer vorteilhaften Weiterbildung der Erfindung können bei einem 12-Gang-Getriebe durch Mehrfachnutzung der Zahnradsätze nur acht Gangebenen verwendet sein, wobei der gemeinsam genutzte, die fünfte Radebene bildende Zahnradsatz des zweiten Teilgetriebes dem ersten Teilgetriebe unmittelbar benachbart angeordnet ist. Das Doppelkupplungsgetriebe kann somit baulich relativ kurz und mit geringst möglichen Schaltelementen und Gangstellern ausgeführt sein.

Des Weiteren können dazu Festzahnräder mehrerer Rad- oder Gangebenen beider Teilgetriebe auf jeweils gemeinsamen Hohlwellen befestigt und diese auf der gemeinsamen Abtriebswelle drehbar gelagert sowie über Schaltkupplungen (das heißt Schaltelemente) mit der Abtriebswelle koppelbar sein.

Ferner können weitere Festzahnräder der Gangebenen auf einer Hohlwelle angeordnet sein, die auf der Eingangswelle des einen Teilgetriebes gelagert ist und die mittels einer Schaltkupplung mit dem besagten Zahnradsatz des anderen Teilgetriebes kuppelbar ist.

Schließlich können bei möglichst geringem, getriebetechnischen Aufwand die zwölf Vorwärtsgänge mittels fünf Doppelkupplungen und einer Einfachkupplung schaltbar sein, wobei vier Doppelkupplungen auf den koaxial angeordneten beiden Eingangswellen der Teilgetriebe und eine Doppelkupplung sowie eine Einfachkupplung auf der gemeinsamen Abtriebswelle positioniert sind.

Ein Ausführungsbeispiel der Erfindung ist im Folgenden anhand der beigefügten Zeichnung näher beschrieben. Es zeigen:
- Fig. 1: als Blockschaltbild ein Geschwindigkeits-Wechselgetriebe für Kraftfahrzeuge mit zwei Teilgetrieben, die über zwei lastschaltbare Kupplungen aktivierbar sind und mit 12 schaltbaren Vorwärtsgängen, wobei ein Zahnradsatz des Getriebes für beide Teilgetriebe nutzbar ist; und
- Fig. 2: eine Schaltmatrix des Wechselgetriebes nach Fig. 1.

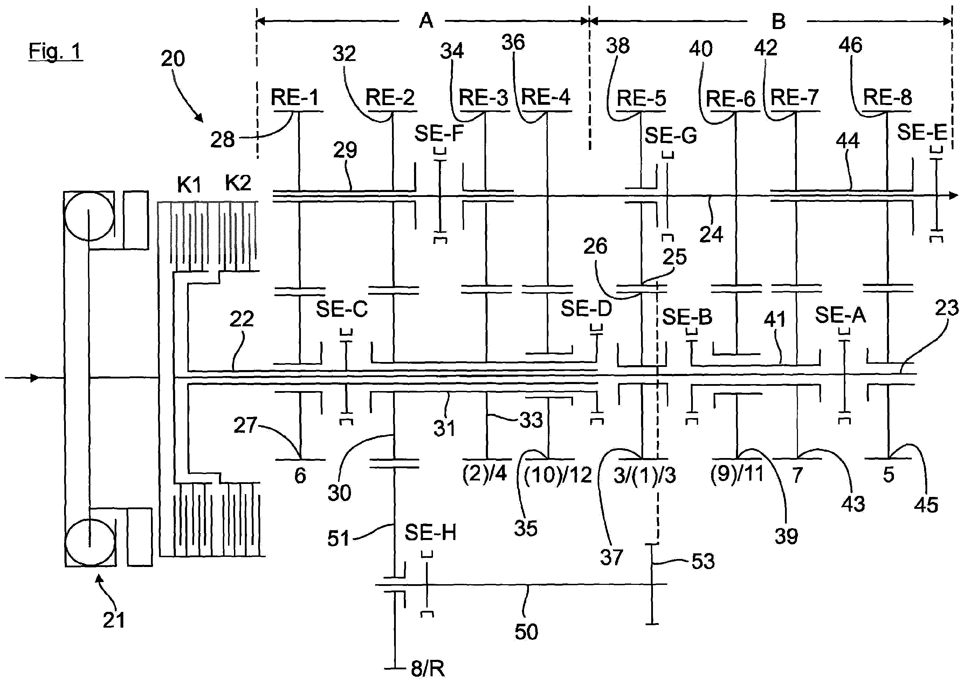

Die Fig. 1 zeigt ein Geschwindigkeits-Wechselgetriebe bzw. ein Doppelkupplungsgetriebe 20 für ein Kraftfahrzeug, mittels dem in acht Radebenen bzw. mit acht Zahnradsätzen RE-1 bis RE-8 bis zu zwölf Vorwärtsgänge 1 bis 12 schaltbar sind. Jede der Radebenen RE-1 bis RE-8 ist aus einem zur Eingangswelle 22, 23 koaxialen antriebsseitigen Zahnrad und einem zur Abtriebswelle 24 koaxialen abtriebsseitigen Zahnrad aufgebaut.

Das Wechselgetriebe 20 weist zwei zum Beispiel mit einer Brennkraftmaschine (nicht dargestellt) und einem Drehschwingungsdämpfer 21 trieblich verbundene und über zwei lastschaltbare Kupplungen K1, K2 alternierend kuppelbare Eingangswellen 22, 23 auf, von denen die Eingangswelle 22 eine Hohlwelle ist, durch die hindurch die zweite Eingangswelle 23 geführt ist. Die Drehlagerung und das korrespondierende Getriebegehäuse sind nicht dargestellt.

Die Zahnradsätze oder Radebenen RE-1 bis RE-8 sind in an sich bekannter Weise durch schaltbare Loszahnräder und durch Festzahnräder auf den Eingangswellen 22, 23 und auf einer gemeinsamen Abtriebswelle 24 in noch zu beschreibender Weise angeordnet, wobei die Zahnradsätze RE-1 bis RE-4 ein erstes Teilgetriebe A und die Zahnradsätze RE-5 bis RE-8 ein zweites Teilgetriebe B bilden.

Der Zahnradsatz RE-5 des Teilgetriebes B ist mit einem Festzahnrad 38 auf der Abtriebswelle 24 und einem schaltbaren Loszahnrad 26 auf der Eingangswelle 23 axial unmittelbar benachbart dem Teilgetriebe A derart angeordnet, dass dessen Loszahnrad 27 über eine Schaltkupplung SE-D entweder mit dem Teilgetriebe A oder über eine Schaltkupplung SE-B dem Teilgetriebe B kuppelbar ist.

Die Anordnung der übrigen Zahnradsätze ist derart, dass bei nur acht Zahnradsätzen RE-1 bis RE-8 die 12 Vorwärtsgänge realisierbar sind, wobei:
- das Loszahnrad 27 von RE-1 auf der Eingangswelle 22 und dessen Festzahnrad 28 auf einer koaxial zur Abtriebswelle 24 gelagerten Hohlwelle 29 drehfest angeordnet ist;
- ein Festzahnrad 30 von RE-2 über eine Hohlwelle 31 auf der Eingangswelle 22 gelagert und das korrespondierende Festzahnrad 32 ebenfalls auf der Hohlwelle 29 drehfest angeordnet ist;
- das Loszahnrad 27 und die Hohlwelle 31 mittels einer Schaltkupplung SE-C alternierend mit der Eingangswelle 22 kuppelbar sind;
- ein Festzahnrad 33 von RE-3 auf der Hohlwelle 31 angeordnet ist, während dessen Loszahnrad 34 oder die Hohlwelle 29 alternierend über eine Schaltkupplung SE-F mit der Abtriebswelle 24 kuppelbar sind;
- auf der Hohlwelle 31 ist ferner ein Loszahnrad 35 des Zahnradsatzes RE-4 gelagert, das mit einem Festzahnrad 36 auf der Abtriebswelle 24 kämmt;
- unmittelbar axial benachbart zum Loszahnrad 35 des Zahnradsatzes RE-4 ist das Loszahnrad 37 des Zahnradsatzes RE-5 auf der zentralen Eingangswelle 23 des Teilgetriebes B gelagert, das mit dem weiteren Festzahnrad 38 auf der Abtriebswelle 24 in Eingriff ist;
- die beiden Loszahnräder 35, 37 sind über eine weitere Schaltkupplung SE-D alternierend mit der Hohlwelle 31 auf der Eingangswelle 22 kuppelbar;
- zudem ist das Loszahnrad 37 über eine zweite Schaltkupplung SE-B mit einer auf der Eingangswelle 23 gelagerten Hohlwelle 41 kuppelbar, wobei die Hohlwelle 41 ein Loszahnrad 39 des Zahnradsatzes RE-6 trägt, das ebenfalls über die Schaltkupplung SE-B an die Hohlwelle 41 kuppelbar ist;
- das Loszahnrad 39 des Zahnradsatzes RE-6 kämmt mit einem weiteren Festzahnrad 40 auf der Abtriebswelle 24;
- die Hohlwelle 41 weist ferner ein Festzahnrad 43 des Zahnradsatzes RE-7 auf, das mit einem Festzahnrad 42 auf einer auf der Abtriebswelle 24 drehbar gelagerten Hohlwelle 44 in Eingriff ist;
- die Hohlwelle 41 auf der Eingangswelle 23 kann ferner über eine Schaltkupplung SE-A mit der Eingangswelle 23 verbunden werden, wobei die Schaltkupplung SE-A alternierend auch ein Loszahnrad 45 des Zahnradsatzes RE-8 an die Eingangswelle 23 kuppelt;
- das Festzahnrad 46 des Zahnradsatzes RE-8 ist analog zum Festzahnrad 42 des RE-7 auf der Hohlwelle 44 angeordnet, wobei die Hohlwelle 44 über eine Einfach-Schaltkupplung SE-E mit der Abtriebswelle 24 verbindbar ist.

Die Schaltkupplungen SE-C, SE-F, SE-D, SE-B und SE-A können als bekannte und bei Schaltgetrieben übliche Doppel-Synchronkupplungen (mit einer Stellung deren Schaltmuffen auf der Zeichnung Fig. 1 nach links (li) oder nach rechts (re) und die Schaltkupplung SE-E als eine Einfach-Synchronkupplung (Schaltstellung li) ausgeführt sein, die elektronisch gesteuert über entsprechende elektrisch/hydraulisch betätigte Aktoren jeweils aus einer Neutralstellung (wie gezeichnet) geschaltet werden.

Die Kupplungen K1, K2 können hydraulisch lastschaltbare Lamellenkupplungen sein, die alternierend betätigt das Teilgetriebe A oder B nach entsprechender Vorwahl der Gänge in den Antriebskraftfluss einkuppeln.

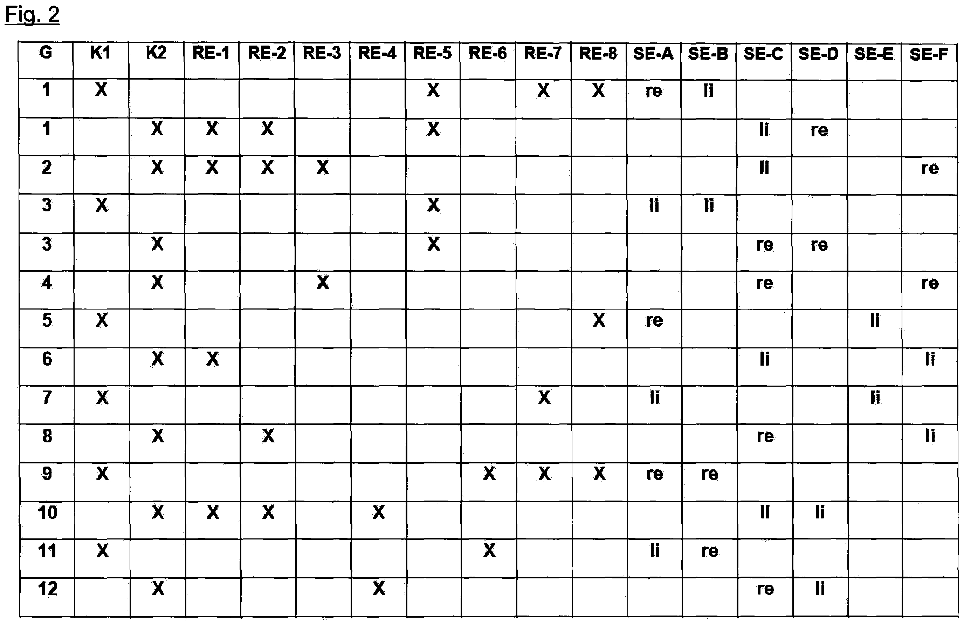

Die Vorwärtsgänge 1 bis 12 (ein gegebenenfalls erforderlicher Rückwärtsgang ist der Einfachheit halber nicht eingezeichnet) können gemäß der Schaltmatrix Fig. 2 geschaltet werden, wobei der jeweils geschaltete Gang (G) 1 bis 12 in der linken Spalte der Matrix angegeben ist. Die Kreuzchen (X) bezeichnen die in den jeweiligen Kraftfluss eingebundenen Zahnradsätze RE1 bis RE8 und die Bezeichnung (li) oder (re) die Schaltstellungen der jeweiligen Schaltkupplungen SE. Zu bemerken ist, dass die Gänge 1 und 3 in der Spalte G zweifach angegeben sind, da diese wahlweise über das Teilgetriebe B (Kupplung K1) oder das Teilgetriebe A (Kupplung K2) schaltbar sind.

Die reguläre Schaltfolge kann dementsprechend sein 1 - 2 - 3 - 4 - 5 ff., wobei der 1. Gang über die Kupplung K1 (Teilgetriebe B) und die weiteren Gänge durch alternierendes Schließen der Kupplungen K2, K1, K2, etc. erfolgt. In dem Teilgetriebe mit der offenen Kupplung kann wie bekannt der nächste Gang vorgewählt werden, wodurch durch Umschalten der Kupplungen K1, K2 ohne Unterbrechung der Zugkraft geschaltet werden kann.

In der modifizierten Schaltfolge kann der 2. Gang und gegebenenfalls auch der 4. Gang ohne Unterbrechung der Zugkraft übersprungen werden, wobei der Kraftfluss im 1.Gang über die Kupplung K1 oder K2 (Teilgetriebe A oder B) bei entsprechender Einbindung der Zahnradsätze RE-1 bis RE-8 und Stellung der Schaltkupplungen SE (siehe Matrix) gesteuert wird. Daraus resultiert, dass jeweils der 3. Gang und gegebenenfalls der 5.Gang bereits vorgewählt und durch Wechsel der lastschaltbaren Kupplung ohne Unterbrechung der Zugkraft aktivierbar ist.

Steuerbar sind somit neben der regulären Schaltfolge des Doppelkupplungsgetriebes 20 die modifizierten Schaltfolgen 1 - 3 - 4 - 5 - 6 ff. in der Folge K2, K1, K2, K1, K2 ff. oder 1 - 3 - 5 - 6, ff., in der Folge K1, K2, K1, K2 ff., wobei die Schaltfolgen abhängig von Betriebsdaten und Fahrparametern des Kraftfahrzeugs über eine elektronische Getriebesteuerung vorgebbar und/oder manuell einstellbar sind.

Wie aus Schaltmatrix der Fig. 2 weiter hervorgeht, sind die Vorwärtsgänge 3 bis 8 sowie 11 und 12 als Direktgänge ausgelegt, die jeweils genau eine in den Momentenfluss geschaltete Radebene aufweisen. Im Unterschied dazu sind die Vorwärtsgänge 1, 2 und 9 sowie 10 nicht als Direktgänge, sondern als Verwindungsgänge realisiert, in denen mittels der Schaltelemente SE-A bis SE-G jeweils genau drei Radebenen in Reihe kombiniert in den Momentenfluss geschaltet sind. Beispielhaft sind im ersten Vorwärtsgang (Verwindungsgang) die achte, siebte und fünfte Radebene RE-8, RE-7 und RE-5 im Momentenfluss geschaltet. Im 2. Vorwärtsgang (Verwindungsgang) sind die erste, zweite und dritte Radebene RE-1, RE-2, RE-3 in den Momentenfluss geschaltet. Im 9. Vorwärtsgang (Verwindungsgang) sind die achte, siebte und sechste Radebene RE-8, RE-7, RE-6 geschaltet. Bei eingelegtem 10. Vorwärtsgang (Verwindungsgang) sind die erste, zweite und vierte Radebene RE-1, RE-2 und RE-4 geschaltet.

Zur Bereitstellung des jeweiligen Verwindungs-Vorwärtsgangs 1, 2 und 9 sowie 10 sind die zu schaltenden drei Radebenen entweder komplett dem ersten Teilgetriebe A oder komplett dem zweiten Teilgetriebe B zugeordnet. Das heißt dass bei einem geschalteten Verwindungs-Vorwärtsgang nur das die drei Verwindungs-Radebenen aufweisende Teilgetriebe im Momentenfluss des eingelegten Ganges eingebunden ist, während das andere Teilgetriebe vollständig vom Momentenfluss abgekoppelt ist.

Zur Bildung eines Rückwärtsganges R ist achsparallel zu den Eingangswellen 22, 23 und der Abtriebswelle 24 eine die beide Teilgetriebe A, B überbrückende Rückwärtsgangwelle 50 im nicht dargestellten Getriebegehäuse des Doppelkupplungsgetriebes gelagert. Die Rückwärtsgangwelle 50 trägt zwei Umkehrzahnräder 51, 53, von denen das erste Umkehrzahnrad 51 mit dem antriebsseitigen Zahnrad 30 der zweiten Radebene RE-2 und das zweite Umkehrzahnrad 53 mit dem antriebsseitigen Zahnrad 37 der fünften Radebene RE-5 kämmt.

Das mit der zweiten Radebene RE-2 des Teilgetriebes A zusammenwirkende erste Umkehrzahnrad 51 ist als Loszahnrad ausgeführt und mittels eines einseitig schaltbaren Schaltelements SE-H an die Rückwärtsgangwelle 50 ankuppelbar. Das mit der fünften Radebene RE-5 zusammenwirkende Umkehrzahnrad 53 ist dagegen als ein Festzahnrad ausgeführt.

Der Rückwärtsgang R wird dadurch aktiviert, dass das von der ersten Eingangswelle 22 getragene Schaltelement SE-C in der Fig. 1 nach links auf das antriebsseitige Zahnrad 30 der ersten Radebene RE-1 geschaltet wird. Zudem wird das Schaltelement SE-H nach links auf das erste Umkehrzahnrad 51 geschaltet und wird das abtriebsseitige Zahnrad 38 der Zwischen-Radebene RE-5 über das Schaltelement SE-G mit der Abtriebswelle 24 gekuppelt. Der Rückwärtsgang R ist daher ein Verwindungsgang, wobei der Momentenfluss bei geschlossener Trennkupplung K2 über die hohle Eingangswelle 22 und das antriebsseitige Zahnrad 30 der zweiten Radebene RE-2 auf das erste Umkehrzahnrad 51 und weitere über die Rückwärtsgangwelle 50 sowie das zweite Umkehrzahnrad 53 auf das abtriebsseitige Zahnrad 38 der Zwischen-Radebene RE-5 verläuft.

## Patentansprüche

1. Doppelkupplungsgetriebe für ein Kraftfahrzeug, mit über Schaltelemente schaltbaren Zahnradsätzen, die genau acht in Axialrichtung von der Eingangs- zur Ausgangsseite des Doppelkupplungsgetriebes in der Reihenfolge erste bis achte hintereinander angeordnete Radebenen (RE-1 bis RE-8) bilden, die jeweils einem ersten Teilgetriebe (A) und einem zweiten Teilgetriebe (B) zugeordnet sind, von denen das erste Teilgetriebe (A) eine erste Eingangswelle (22) aufweist und das zweite Teilgetriebe (B) eine zweite Eingangswelle (23) aufweist, und beide Teilgetriebe (A, B) eine gemeinsame Abtriebswelle (24) aufweisen, wobei die zueinander koaxialen Eingangswellen (22, 23) über je eine lastschaltbare Kupplung (K1, K2) alternierend aktivierbar sind, und dem ersten Teilgetriebe (A) die geraden Vorwärtsgänge (2, 4, 6, 8, 10, 12) sowie dem zweiten Teilgetriebe (B) die ungeraden Vorwärtsgänge (1, 3, 5, 7, 9, 11) zugeordnet sind, die bei einer Gangschaltung über die Schaltelemente (SE-A bis SE-G) schaltbar sind, wobei zumindest zwei Radebenen (RE-1, RE-2) des ersten Teilgetriebes (A) sowohl lose auf dessen Eingangswelle (22) drehgelagerte antriebsseitige Zahnräder (27, 30) als auch damit kämmende, lose auf der Abtriebswelle (24) drehgelagerte abtriebsseitige Zahnräder (28, 32) aufweisen, die mittels Schaltelementen (SE-C, SE-F) mit der ersten Eingangswelle (22) und/oder mit der Abtriebswelle (24) kuppelbar oder davon abkuppelbar ist, wobei die beiden abtriebsseitigen Zahnräder (28, 32) der beiden Radebenen (RE-1, RE-2) auf einer, auf der Abtriebswelle (24) koaxial drehgelagerten abtriebsseitigen Hohlwelle (29) drehfest angeordnet sind, die über genau ein erstes Schaltelement (SE-F) mit der Abtriebswelle (24) kuppelbar ist, und wobei die beiden antriebsseitigen Zahnräder (27, 30) der beiden Radebenen (RE-1, RE-2) über genau ein zweites Schaltelement (SE-C) alternierend mit der Eingangswelle (22) des ersten Teilgetriebes (A) kuppelbar sind, **dadurch gekennzeichnet, dass** die beiden Radebenen (RE-1, RE-2) als die erste und die zweite Radebene in dem ersten Teilgetriebe (A) angeordnet sind, und dass das erste Teilgetriebe (A) die dritte Radebene (RE-3) aufweist, die ein lose auf der Eingangswelle (22) des ersten Teilgetriebes (A) drehgelagertes antriebsseitiges Zahnrad (33) und ein damit kämmendes, lose auf der Abtriebswelle (24) drehgelagertes abtriebsseitiges Zahnrad (33) aufweist, dass das abtriebsseitige Zahnrad (34) der dritten Radebene (RE-3) mittels des ersten Schaltelements (SE-F) mit der Abtriebswelle (24) kuppelbar ist, und dass das erste Schaltelement (SE-F) als ein in Axialrichtung beidseitig schaltbares Schaltelement zwischen den beiden abtriebsseitigen Zahnrädern (32, 34) der zweiten und dritten Radebene (RE-2, RE-3) angeordnet ist, dass das antriebsseitige Zahnrad (33) der dritten Radebene (RE-3) zusammen mit dem antriebsseitigen Zahnrad (30) der zweiten Radebene (RE-2) drehfest auf einer, auf der ersten Eingangswelle (22) koaxial drehgelagerten antriebsseitigen Hohlwelle (31) angeordnet ist, und dass das erste Teilgetriebe (A) die vierte Radebene (RE-4) aufweist, die ein drehfest auf der Abtriebswelle (24) angeordnetes abtriebsseitiges Zahnrad (36) und ein damit kämmendes, lose auf der antriebsseitigen Hohlwelle (31) drehgelagertes antriebsseitiges Zahnrad (35) aufweist, und dass das antriebsseitige Zahnrad (35) der vierten Radebene (RE-4) mit einem dritten Schaltelement (SE-D) mit der antriebsseitigen Hohlwelle (31) des ersten Teilgetriebes (A) kuppelbar ist, dass das zweite Teilgetriebe (B) die fünfte Radebene (RE-5) aufweist, die ein lose auf der zweiten Eingangswelle (23) drehgelagertes antriebsseitiges Zahnrad (37) und ein lose auf der Abtriebswelle (24) drehgelagertes abtriebsseitiges Zahnrad (38) aufweist, und dass das abtriebsseitige Zahnrad (38) der fünften Radebene (RE-5) über ein viertes Schaltelement (SE-G) mit der Abtriebswelle (24) kuppelbar ist.

2. Doppelkupplungsgetriebe nach Anspruch 1, **dadurch gekennzeichnet, dass** das zweite Schaltelement (SE-C) ein in der Axialrichtung beidseitig schaltbares Schaltelement ist, und dass das zweite Schaltelement (SE-C) in der Axialrichtung zwischen den beiden antriebsseitigen Zahnrädern (27, 30) der beiden Radebenen (RE-1, RE-2) von der Eingangswelle (22) des ersten Teilgetriebes (A) getragen ist.

3. Doppelkupplungsgetriebe nach Anspruch 1, **dadurch gekennzeichnet, dass** das antriebsseitige Zahnrad (37) der fünften Radebene (RE-5) mittels des dritten Schaltelements (SE-D) mit der antriebsseitigen Hohlwelle (31) des ersten Teilgetriebes (A) kuppelbar ist, und dass das dritte Schaltelement (SE-D) ein in der Axialrichtung beidseitig schaltbares Schaltelement ist, das in der Axialrichtung zwischen der vierten Radebene (RE-4) und der fünften Radebene (RE-5) von der Hohlwelle (31) getragen ist.

4. Doppelkupplungsgetriebe nach einem der vorhergehenden Ansprüche, **dadurch gekennzeichnet, dass** das zweite Teilgetriebe (B) die siebte und die achte Radebene (RE-7, RE-8) aufweist, deren beiden antriebsseitigen Zahnräder (43, 45) lose auf der zweiten Eingangswelle (23) drehgelagert sind und deren beiden abtriebsseitigen Zahnräder (42, 46) lose auf der Abtriebswelle (24) drehgelagert sind, und dass die beiden abtriebsseitigen Zahnräder (42, 46) der siebten und achten Radebenen (RE-7, RE-8) auf einer, auf der Abtriebswelle (24) koaxial drehgelagerten abtriebsseitigen Hohlwelle (44) drehfest angeordnet sind, die über ein viertes Schaltelement (SE-E) mit der Abtriebswelle (24) kuppelbar ist.

5. Doppelkupplungsgetriebe nach Anspruch 4, **dadurch gekennzeichnet, dass** die beiden antriebsseitigen Zahnräder (43, 45) der siebten und achten Radebenen (RE-7, RE-8) über genau ein sechstes Schaltelement (SE-A) alternierend mit der Eingangswelle (23) des zweiten Teilgetriebes (B) kuppelbar ist, und dass das sechste Schaltelement (SE-A) in der Axialrichtung zwischen den beiden antriebsseitigen Zahnräder (43, 45) der siebten und achten Radebenen (RE-7, RE-8) von der zweiten Eingangswelle (23) getragen ist und als ein beidseitig schaltbares Schaltelement ausgebildet ist.

6. Doppelkupplungsgetriebe nach einem der Ansprüche 4 oder 5, **dadurch gekennzeichnet, dass** das zweite Teilgetriebe (B) die sechste Radebene (RE-6) aufweist, die ein drehfest auf der Abtriebswelle (24) angeordnetes, abtriebsseitiges Zahnrad (40) und ein damit kämmendes, lose auf einer antriebsseitigen Hohlwelle (41) des zweiten Teilgetriebes (B) drehgelagertes antriebsseitiges Zahnrad (39) aufweist.

7. Doppelkupplungsgetriebe nach Anspruch 1 und 6, **dadurch gekennzeichnet, dass** zwischen der fünften Radebene (RE-5) und der sechsten Radebene (RE-6) ein siebtes Schaltelement (SE-B) angeordnet ist, das ein in der Axialrichtung beidseitig wirkendes Schaltelement ist, und dass mittels des siebten Schaltelements (SE-B) entweder das antriebsseitige Zahnrad (37) der fünften Radebene (RE-5) oder das antriebsseitige Zahnrad (39) der sechsten Radebene (RE-6) mit der antriebsseitigen Hohlwelle (41) des zweiten Teilgetriebes (B) kuppelbar ist.

## Claims

1. Dual clutch transmission for a motor vehicle having gear sets switchable via switching elements, which form precisely eight wheel planes (RE-1 to RE-8) disposed one after the other in axial direction from the input side to the output side of the dual clutch transmission in the sequence first to eighth, which are assigned respectively to a first sub-transmission (A) and a second sub-transmission (B), of which the first sub-transmission (A) has a first input shaft (22) and the second sub-transmission (B) has a second input shaft (23), and both sub-transmissions (A, B) have a shared output shaft (24), wherein the input shafts (22, 23) coaxial to one another can be alternatingly activated via in each case one load-shiftable coupling (K1, K2), and the even forward gears (2, 4, 6, 8, 10, 12) are assigned to the first sub-transmission (A) and the odd forward gears (1, 3, 5,7, 9, 11) are assigned to the second sub-transmission (B), which are switchable in the case of a gear shifting via the switching elements (SE-A to SE-G), wherein at least two wheel planes (RE-1, RE-2) of the first sub-transmission (A) have both loose gears (27, 30) on the drive side rotationally mounted on its input shaft (22) and, meshing therewith, loose gears (28, 32) on the output side rotationally mounted on the output shaft (24), which is coupleable with or uncoupleable from the first input shaft (22) and/or the output shaft (24) by means of switching elements (SE-C , SE-F), wherein the two output-side gears (28, 32) of the two wheel planes (RE-1, RE-2) are non-rotationally disposed on an output-side hollow shaft (29) coaxially rotationally mounted on the output shaft (24), which is coupleable via exactly one first switching element (SE-F) with the output shaft (24), and wherein the two output side gears (27, 30) of the two wheel planes (RE-1, RE-2) are coupleable via exactly one second switching element (SE-C) alternatingly with the input shaft (22) of the first sub-transmission (A), **characterised in that** the two wheel planes (RE-1, RE-2) are disposed as the first and the second wheel plane in the first sub-transmission (A), and that the first sub-transmission (A) has the third wheel plane (RE-3), which has a loose gear (33) on the drive side rotationally mounted on the input shaft (22) of the first sub-transmission (A) and, meshing therewith, a loose gear (33) on the output side rotationally mounted on the output shaft (24), that the output side gear (34) of the third wheel plane (RE-3) is coupleable by means of the first switching element (SE-F) with the output shaft (24), and that the first switching element (SE-F) is disposed as a switching element, switchable in axial direction on both sides, between the two output side gears (32, 34) of the second and third wheel plane (RE-2, RE-3), that the drive side gear (33) of the third wheel plane (RE-3) together with the drive side gear (30) of the second wheel plane (RE-2) is disposed non-rotationally on a drive side hollow shaft (31) coaxially rotationally mounted on the first input shaft (22), and that the first sub-transmission (A) has the fourth wheel plane (RE-4), which has an output side gear (36) non-rotationally disposed on the output shaft (24) and, meshing therewith, a drive side loose gear (35) rotationally mounted on the drive side hollow shaft (31), and that the drive side gear (35) of the fourth wheel plane (RE-4) is coupleable with a third switching element (SE-D) with the drive side hollow shaft (31) of the first sub-transmission (A), that the second sub-transmission (B) has the fifth wheel plane (RE-5), which has a drive side loose gear (37) rotationally mounted on the second input shaft (23) and an output side loose gear (38) rotationally mounted on the output shaft (24), and that the output side gear (38) of the fifth wheel plane (RE-5) is coupleable via a fourth switching element (SE-G) with the output shaft (24).

2. Dual clutch transmission according to claim 1, **characterised in that** the second switching element (SE-C) is a switching element which is switchable in axial direction on both sides, and that the second switching element (SE-C) is supported in the axial direction between the two drive side gears (27, 30) of the two wheel planes (RE-1, RE-2) by the input shaft (22) of the first sub-transmission (A).

3. Dual clutch transmission according to claim 1, **characterised in that** the drive side gear (37) of the fifth wheel plane (RE-5) is coupleable by means of the third switching element (SE-D) with the drive side hollow shaft (31) of the first sub-transmission (A), and that the third switching element (SE-D) is a switching element which is switchable in axial direction on both sides, which in the axial direction is supported between the fourth wheel plane (RE-4) and the fifth wheel plane (RE-5) of the hollow shaft (31).

4. Dual clutch transmission according to any of the preceding claims, **characterised in that** the second sub-transmission (B) has the seventh and the eighth wheel plane (RE-7, RE-8), of which the two drive side gears (43, 45) are loosely rotationally mounted on the second input shaft (23) and of which the two output side gears (42, 46) are loosely rotationally mounted on the output shaft (24), and that the two output side gears (42, 46) of the seventh and eighth wheel planes (RE-7, RE-8) are non-rotationally disposed on an output side hollow shaft (44), which is coaxially rotationally mounted on the output shaft (24), which hollow shaft is coupleable via a fourth switching element (SE-E) with the output shaft (24).

5. Dual clutch transmission according to claim 4, **characterised in that** the two drive side gears (43, 45) of the seventh and eighth wheel planes (RE-7, RE-8) is coupleable via exactly one sixth switching element (SE-A) alternatingly with the input shaft (23) of the second sub-transmission (B), and that the sixth switching element (SE-A) is supported in the axial direction between the two drive side gears (43, 45) of the seventh and eighth wheel planes (RE-7, RE-8) by the second input shaft (23) and is formed as a switching element switchable on both sides.

6. Dual clutch transmission according to any of claims 4 or 5, **characterised in that** the second sub-transmission (B) has the sixth wheel plane (RE-6), which has one output side gear (40) disposed non-rotationally on the output shaft (24) and, meshing therewith, a loose drive side gear (39) rotationally mounted on a drive side hollow shaft (41) of the second sub-transmission (B).

7. Dual clutch transmission according to claim 1 and 6, **characterised in that** between the fifth wheel plane (RE-5) and the sixth wheel plane (RE-6) is disposed a seventh switching element (SE-B), which is a switching element acting on both sides in the axial direction, and that by means of the seventh switching element (SE-B) either the drive side gear (37) of the fifth wheel plane (RE-5) or the drive side gear (39) of the sixth wheel plane (RE-6) is coupleable with the drive side hollow shaft (41) of the second sub-transmission (B).

## Revendications

1. Boîte de vitesses à double embrayage pour un véhicule à moteur, avec des trains de roues dentées commutables par le biais d'éléments de commutation, qui forment exactement huit plans de roue (RE-1 à RE-8) agencés l'un derrière l'autre dans l'ordre un à huit dans la direction axiale du côté entrée au côté sortie de la boîte de vitesses à double embrayage, qui sont attribués respectivement à une première demi-boîte (A) et à une deuxième demi-boîte (B), desquelles la première demi-boîte (A) présente un premier arbre d'entrée (22) et la deuxième demi-boîte (B) présente un deuxième arbre d'entrée (23), et les deux demi-boîtes (A, B) présentent un arbre de sortie commun (24), dans laquelle les arbres d'entrée (22, 23) coaxiaux l'un à l'autre sont activables de manière alternée par le biais de respectivement un embrayage commutable sous charge (K1, K2), et les rapports de marche avant pairs (2, 4, 6, 8, 10, 12) sont attribués à la première demi-boîte (A) et les rapports de marche avant impairs (1, 3, 5, 7, 9, 11) sont attribués à la deuxième demi-boîte (B), qui sont commutables lors d'un changement de vitesses par le biais des éléments de commutation (SE-A à SE-G), dans laquelle au moins deux plans de roue (RE-1, RE-2) de la première demi-boîte (A) présentent aussi bien des roues dentées côté entraînement (27, 30) logées en rotation librement sur son arbre d'entrée (22) que des roues dentées côté sortie (28, 32) logées en rotation librement sur l'arbre de sortie (24), s'engrenant avec celles-ci, qui peut être couplée avec le premier arbre d'entrée (22) et/ou avec l'arbre de sortie (24) au moyen d'éléments de commutation (SEC, SE-F) ou en être découplée, dans laquelle les deux roues dentées côté sortie (28, 32) des deux plans de roue (RE-1, RE-2) sont agencées solidaires en rotation sur un arbre creux côté sortie (29) logé en rotation coaxialement sur l'arbre de sortie (24), qui peut être couplé avec l'arbre de sortie (24) par le biais d'exactement un premier élément de commutation (SE-F), et dans laquelle les deux roues dentées côté entraînement (27, 30) des deux plans de roue (RE-1, RE-2) peuvent être couplées de manière alternée avec l'arbre d'entrée (22) de la première demi-boîte (A) par le biais d'exactement un deuxième élément de commutation (SE-C), **caractérisée en ce que** les deux plans de roue (RE-1, RE-2) sont agencés en tant que le premier et le deuxième plan de roue dans la première demi-boîte (A), et que la première demi-boîte (A) présente le troisième plan de roue (RE-3), qui présente une roue dentée côté entraînement (33) logée en rotation librement sur l'arbre d'entrée (22) de la première demi-boîte (A) et une roue dentée côté sortie (33) logée en rotation librement sur l'arbre de sortie (24), s'engrenant avec celle-ci, que la roue dentée côté sortie (34) du troisième plan de roue (RE-3) peut être couplée avec l'arbre de sortie (24) au moyen du premier élément de couplage (SE-F), et que le premier élément de commutation (SE-F) est agencé en tant qu'élément de commutation commutable des deux côtés dans la direction axiale entre les deux roues dentées côté sortie (32, 34) du deuxième et troisième plan de roue (RE-2, RE-3), que la roue dentée côté entraînement (33) du troisième plan de roue (RE-3) est agencée conjointement avec la roue dentée côté entraînement (30) du deuxième plan de roue (RE-2) solidaire en rotation sur un arbre creux côté entraînement (31) logé en rotation coaxialement sur le premier arbre d'entrée (22), et que la première demi-boîte (A) présente le quatrième plan de roue (RE-4), qui présente une roue dentée côté sortie (36) agencée solidaire en rotation sur l'arbre de sortie (24) et une roue dentée côté entraînement (35) logée en rotation librement sur l'arbre creux côté entraînement (31), s'engrenant avec celle-ci, et que la roue dentée côté entraînement (35) du quatrième plan de roue (RE-4) peut être couplée avec un troisième élément de commutation (SE-D) avec l'arbre creux côté entraînement (31) de la première demi-boîte (A), que la deuxième demi-boîte (B) présente le cinquième plan de roue (RE-5), qui présente une roue dentée côté entraînement (37) logée en rotation librement sur le deuxième arbre d'entrée (23) et une roue dentée côté sortie (38) logée en rotation librement sur l'arbre de sortie (24), et que la roue dentée côté sortie (38) du cinquième plan de roue (RE-5) peut être couplée avec l'arbre de sortie (24) par le biais d'un quatrième élément de commutation (SE-G).

2. Boîte de vitesses à double embrayage selon la revendication 1, **caractérisée en ce que** le deuxième élément de commutation (SE-C) est un élément de commutation commutable des deux côtés dans la direction axiale, et que le deuxième élément de commutation (SE-C) est porté dans la direction axiale entre les deux roues dentées côté entraînement (27, 30) des deux plans de roue (RE-1, RE-2) par l'arbre d'entrée (22) de la première demi-boîte (A).

3. Boîte de vitesses à double embrayage selon la revendication 1, **caractérisée en ce que** la roue dentée côté entraînement (37) du cinquième plan de roue (RE-5) peut être couplée avec l'arbre creux côté entraînement (31) de la première demi-boîte (A) au moyen du troisième élément de commutation (SE-D), et que le troisième élément de commutation (SE-D) est un élément de commutation commutable des deux côtés dans la direction axiale, qui est porté dans la direction axiale entre le quatrième plan de roue (RE-4) et le cinquième plan de roue (RE-5) par l'arbre creux (31).

4. Boîte de vitesses à double embrayage selon l'une quelconque des revendications précédentes, **caractérisée en ce que** la deuxième demi-boîte (B) présente le septième et le huitième plan de roue (RE-7, RE-8), dont les deux roues dentées côté entraînement (43, 45) sont logées en rotation librement sur le deuxième arbre d'entrée (23) et dont les deux roues dentées côté sortie (42, 46) sont logées en rotation librement sur l'arbre de sortie (24), et que les deux roues dentées côté sortie (42, 46) des septième et huitième plans de roue (RE-7, RE-8) sont agencées solidaires en rotation sur un arbre creux côté sortie (44) logé en rotation coaxialement sur l'arbre de sortie (24), qui peut être couplé avec l'arbre de sortie (24) par le biais d'un quatrième élément de commutation (SE-E).

5. Boîte de vitesses à double embrayage selon la revendication 4, **caractérisée en ce que** les deux roues dentées côté entraînement (43, 45) des septième et huitième plans de roue (RE-7, RE-8) peut être couplée de manière alternée avec l'arbre d'entrée (23) de la deuxième demi-boîte (B) par le biais d'exactement un sixième élément de commutation (SE-A), et que le sixième élément de commutation (SE-A) est porté dans la direction axiale entre les deux roues dentées côté entraînement (43, 45) des septième et huitième plans de roue (RE-7, RE-8) par le deuxième arbre d'entrée (23) et est réalisé en tant qu'élément de commutation commutable des deux côtés.

6. Boîte de vitesses à double embrayage selon l'une quelconque des revendications 4 ou 5, **caractérisée en ce que** la deuxième demi-boîte (B) présente le sixième plan de roue (RE-6), qui présente une roue dentée côté sortie (40) agencée solidaire en rotation sur l'arbre de sortie (24) et une roue dentée côté entraînement (39) logée en rotation librement sur un arbre creux côté entraînement (41) de la deuxième demi-boîte (B), s'engrenant avec celle-ci.

7. Boîte de vitesses à double embrayage selon la revendication 1 et 6, **caractérisée en ce qu'**un septième élément de commutation (SE-B) est agencé entre le cinquième plan de roue (RE-5) et le sixième plan de roue (RE-6), qui est un élément de commutation agissant des deux côtés dans la direction axiale, et que soit la roue dentée côté entraînement (37) du cinquième plan de roue (RE-5) soit la roue dentée côté entraînement (39) du sixième plan de roue (RE-6) peut être couplée avec l'arbre creux côté entraînement (41) de la deuxième demi-boîte (B) au moyen du septième élément de commutation (SE-B).
